# EUROPEAN PATENT SPECIFICATION

(11) **EP 3 571 426 B1**
(45) Date of publication and mention of the grant of the patent: **30.12.2020**
(21) Application number: 18709295.2
(22) Date of filing: 27.02.2018
(51) Int. Cl.: F16H 45/02

(54) **TURBINE-PISTON FOR HYDROKINETIC TORQUE CONVERTER AND METHOD OF OPERATION**
TURBINENKOLBEN FÜR HYDROKINETISCHEN DREHMOMENTWANDLER UND VERFAHREN ZUM BETRIEB
PISTON DE TURBINE POUR CONVERTISSEUR DE COUPLE HYDROCINÉTIQUE ET PROCÉDÉ DE FONCTIONNEMENT

(30) Priority: 02.03.2017 US 201715448309
(43) Date of publication of application: 27.11.2019
(73) Proprietor: Valeo Embrayages, 80009 Amiens Cedex 2 (FR)
(72) Inventor: DURHAM, Patrick, Troy, Michigan 48083 (US); YIN, Xuexian, Troy, Michigan 48083 (US); JEON, GyuBong, Troy, Michigan 48083 (US); DEPRAETE, Alexandre, Atsugi-Shi Kanagawa 243-0213 (JP); GODIN, Neil, Troy, Michigan 48083 (US)
(74) Representative: Isarpatent
(86) International application number: PCT/EP2018/054766
(87) International publication number: WO 2018/158227

(56) References cited:
- US-A1- 2013 230 385
- US-B1- 9 297 448

## Description

### BACKGROUND OF THE INVENTION

### 1 . Field of the Invention

The present invention generally relates to coupling devices, and more particularly to high torque capacity turbine-piston assemblies for hydrokinetic torque converters, and hydrokinetic torque converters including such turbine-piston assemblies, and the associated operation of such assemblies.

### 2. Background of the Invention

Typically, a hydrokinetic torque converter includes an impeller assembly, a turbine assembly, and a stator assembly (or reactor). These elements are collectively referred to as the "torus". The stator assembly typically includes a one-way clutch for restricting rotational direction. The turbine assembly is operatively connected, such as by using mechanical fasteners or by integral connection, with an output (or turbine) hub that is linked in rotation to a driven shaft, which operates as or is linked in rotation to an input shaft of a transmission of a vehicle. The casing of the torque converter generally includes a front cover and an impeller shell, which together define a fluid filled chamber. Impeller blades are fixed to an impeller shell within the fluid filled chamber to define the impeller assembly. The turbine assembly and the stator are also disposed within the chamber, with both the turbine assembly and the stator being relatively rotatable with respect to the front cover and the impeller shell. The turbine assembly includes a turbine shell with a plurality of turbine blades fixed to one side of the turbine shell facing the impeller blades of the impeller.

The turbine assembly works together with the impeller assembly, which is linked in rotation to the casing that is itself linked in rotation to a driving shaft driven by a prime mover, such as an internal combustion engine. The stator is interposed axially between the turbine assembly and the impeller assembly.

Conventionally, and it order to enhance the efficient transfer of torque from the impeller to the turbine, a typical torque converter will include a lock-up feature wherein the relative motion between the impeller and turbine is eliminated in certain operational settings. This feature includes some form of clutch and accompanying friction surface between the respective rotating portions of the impeller and turbine, and an actuating piston to urge the clutch into engagement. In addition, to eliminate or reduce the driveline harshness, a vibration damper is also included between the now locked-in-motion impeller and turbine and the output of the torque converter, which is typically the turbine hub.

The lock-up feature is usually used as a mechanism to reduce power losses and enhance efficiency at relatively higher operational speeds of the vehicle in which such a system has been installed, e.g., at highway speeds. Increasingly, however, as gearboxes have had a proliferation of ratios, e.g., 8 and 9 forward ratios, the lock -up feature is being used at lower and lower speeds, e.g., in town, to enhance efficiency and also in certain "sport" settings to enhance, for example, the slowing effect of engine braking on the drivetrain. As a result, the once limited operation lock-up feature now is used in a variety of additional operational settings. In this regard, and to reduce or eliminate driveline harshness and poor driving feel, e.g., unpredictable operational characteristics of the drive train, the lock-up feature operation should at all times, ideally, be predictable and effective. That is, the lock-up feature should engage in a predictably short time frame and have a torque capacity to handle the operational demand of the drivetrain.

In a known torque converter with a lock-up feature, for example US 2013/0230385 A1, the lock up feature has differing operational and torque absorption characteristics depending on whether the impeller is driving the turbine or whether the turbine is being driven by the driveline, i.e., in a "coasting" mode. Two factors play a role in the lock-up characteristic of the clutch between the impeller and turbine in a coasting mode. First, the hydraulic pressure to actuate the lock-up feature may be insufficient to both lock-up the clutch friction elements and to also, simultaneously, overcome the additional fluid force within the "torus" which in coasting mode can push the turbine and impeller apart (owing to coasting, the formerly driven by the impeller turbine is now driven by the driveline and is pushing fluid against the impeller). Second, because of the additional fluid pressure, the torque capacity of the friction elements is diminished, leading to a "slow" lock-up characteristic. This changing "feel" of the lock-up feature, i.e., the rapidity and certainty thereof, is then dependent on which direction torque is being transmitted through the torque converter assembly. This may not be satisfactory from a drivetrain operational perspective. US 9 297 448 B1 discloses a torque converter, including a lock-up mechanism, adapted to rotate about an axis. In a hydrokinetic torque coupling device of a second exemplary embodiment illustrated in FIGS. 4-10 of this document, the torque converter comprises an annular piston engagement member with an L-shaped cross-section. A radially outer surface of the support portion of the piston engagement member includes an annular slot for receiving a sealing member, such as an O-ring. The sealing member creates a seal at the interface of the casing and the piston engagement member.

### SUMMARY OF THE INVENTION

The present invention provides a torque converter according to claim 1, and a method of operating a torque converter according to claim 8.

An aspect of the invention provides a torque converter assembly that has rapid and high torque lock-up characteristics, preferably whether the driveline is in "drive" or "coast" mode. A secondary piston (or reaction plate) is employed to assist a turbine-piston during the lock-up operation. By inclusion of a secondary piston, the lock-up operation is phased between an initial engagement phase and a subsequent lock-up phase. In the initial engagement phase, contact is made between the respective friction elements of the secondary piston and the turbine-piston, thus slowing the rotational speed differential between the impeller (which is non-rotatably connected to the secondary piston) and the turbine-piston. In the subsequent lock-up phase, lock-up between the turbine-piston and the impeller occurs. The reason for the phasing, and the advantage derived thereby, is that when the differential rotation between the impeller and turbine are equalized, the hydrodynamic thrust pressure inside the torus is likewise reduced. The reduced pressure inside the torus speeds the lock-up phase and enhances the torque capacity of the clutch. Further, in one version of the disclosed device, the secondary piston structure acts as a seal to prevent fluid from flowing between the casing chamber behind the turbine piston into the torus. This fluid, that could otherwise flow around the lock-up device, instead urges the turbine piston more affirmatively into engagement with the lock-up friction surface(s).

Other aspects of the invention, including apparatus, devices, systems, converters, processes, and the like which constitute part of the invention, will become more apparent upon reading the following detailed description of the exemplary embodiments.

### BRIEF DESCRIPTION OF THE SEVERAL VIEWS OF THE DRAWING(S)

The accompanying drawings are incorporated in and constitute a part of the specification. The drawings, together with the general description given above and the detailed description of the exemplary embodiments and methods given below, serve to explain the principles of the invention. The objects and advantages of the invention will become apparent from a study of the following specification when viewed in light of the accompanying drawings, in which like elements are given the same or analogous reference numerals and wherein:
Fig. 1 is a top half cross-sectional view of a hydrokinetic torque converter with a turbine-piston and secondary piston assembly in accordance with an exemplary embodiment of the present invention;
Fig. 2 is an enlarged radially outer cross-sectional view of the assembly of the hydrokinetic torque converter shown in Fig. 1 in lock-up off operation; and
Fig. 3 is an enlarged radially outer cross sectional view of the turbine assembly shown in Fig. 1 in a lock-up initiation configuration.
Fig. 4 is a full sectional view of a full lock-up configuration where the secondary piston and turbine piston have fully engaged the front cover of the torque converter.
Fig. 5 shows an exploded view of the major components of a torque converter including the secondary piston assembly in accord with the present invention.

### DETAILED DESCRIPTION OF EXEMPLARY EMBODIMENT(S) AND EMBODIED

### METHOD(S) OF THE INVENTION

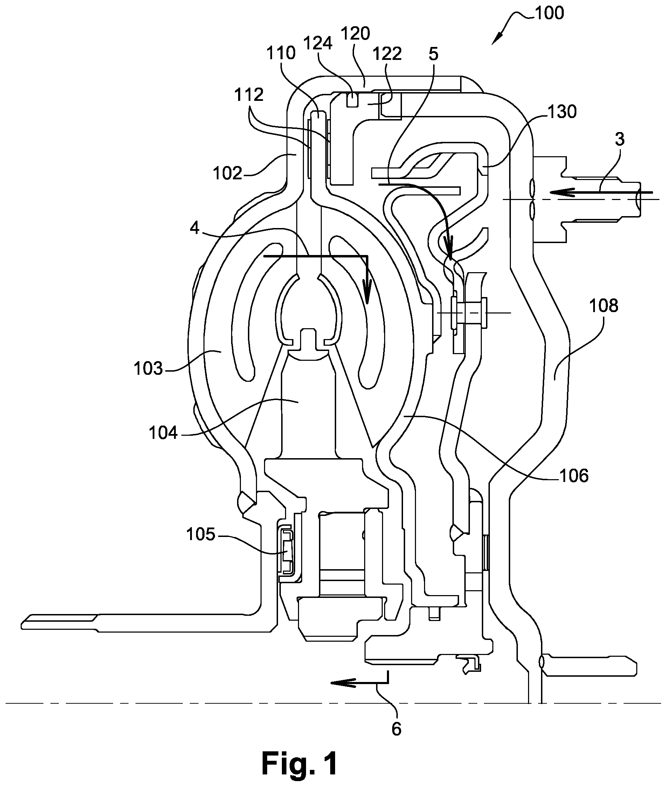

Reference will now be made in detail to exemplary embodiments and methods of the invention as illustrated in the accompanying drawings, Figs 1 -5, in which like reference characters designate like or corresponding parts throughout the drawings. It should be noted, however, that the invention in its broader aspects is not limited to the specific details, representative devices and methods, and illustrative examples shown and described in connection with the exemplary embodiments and methods.

A torque converter 100 including a secondary piston 122 for actuation of the lock-up feature 1 10 between the impeller 102 and turbine 106 is shown in a top half partial section in Fig. 1 . The torque converter 100 includes an impeller 102 including vanes 103 located on an inner side of the front surface of the casing of the torque converter 100. A turbine-piston 106 is located in an axially opposed manner to the impeller 102, with a stator 104 equipped with one-way clutch 105 positioned axially therebetween. The torque path through the torque converter is schematically represented by incoming torque arrow 3, i.e., from an internal combustion ("IC") engine, into the casing/ impeller 102 via arrow 4, to the vaned turbine-piston 106, arrow 5, through the damper 130, and out through the hub of the turbine via arrow 6 to the input shaft (not shown) of a multi-ratio transmission. Rearward casing portion 108 is attached (via welding for example) to the impeller 102 to create, along with the front cover/impeller 102, a fluid tight compartment surrounding the torus elements (i.e., the impeller 102, the stator 104, and the turbine piston 106) as well as the elements making up the lock-up clutch 1 10, and a vibration damper system 130.

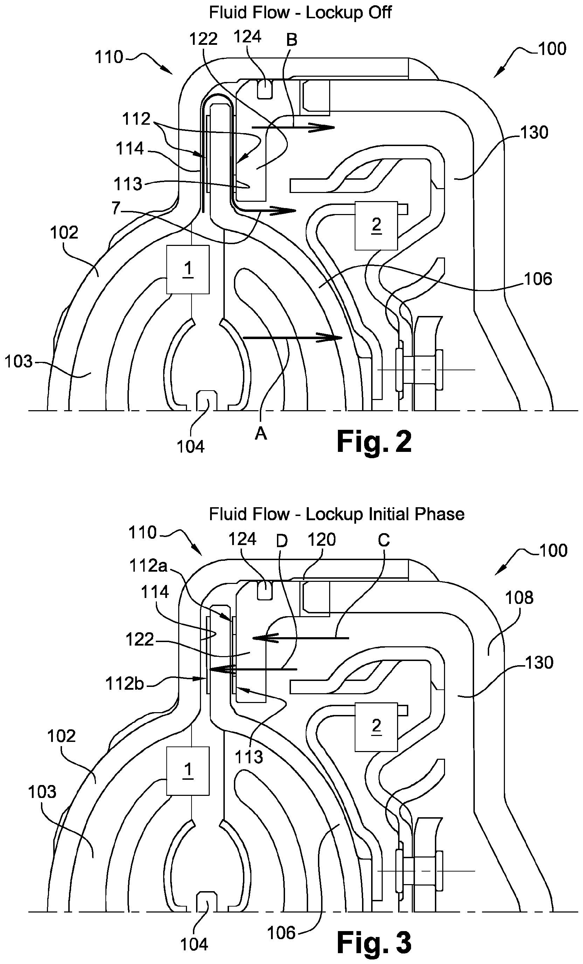

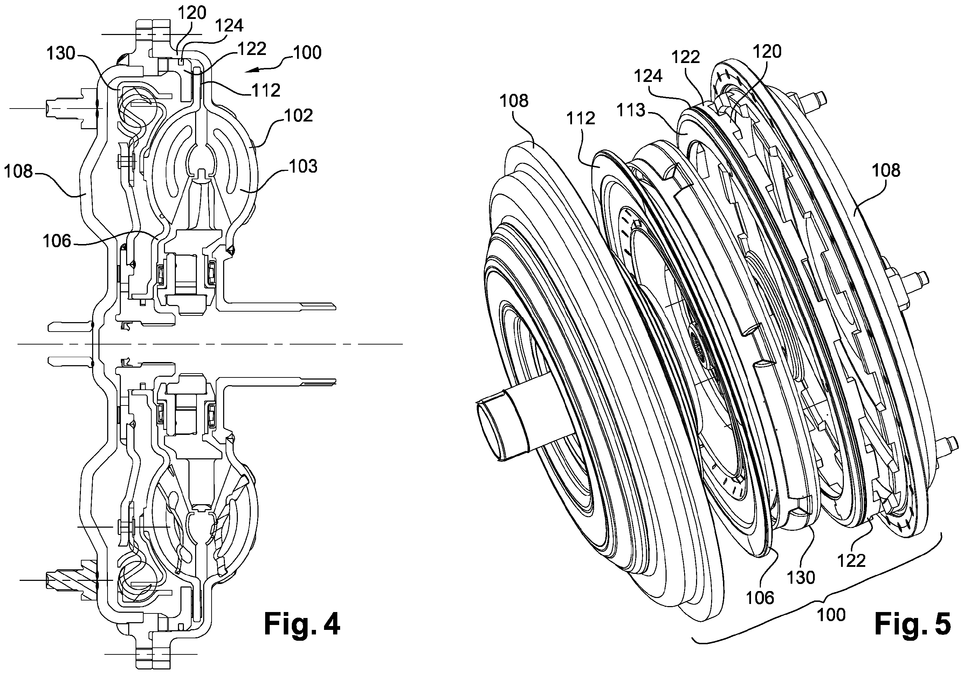

The lock-up clutch 1 10 system includes a secondary piston 122, sealed around its perimeter to the surrounding casing 108 via seal 124, which may be an o-ring or equivalent. The secondary piston 122 can move toward and away with respect to the outer casing 108 and is fixed in rotation with respect to the outer casing 108, for example via splines or tabs 120. See Fig. 5. The secondary piston 122 includes a forwardly facing secondary-piston perimeter friction surface portion 1 13 oriented to engage a (rearwardly oriented) first turbine-piston perimeter friction surface portion 1 12a of the turbine-piston 106. The opposite side of the turbine-piston 106 includes a (forwardly oriented) second perimeter friction surface portion 1 12b which faces an impeller perimeter friction surface portion 1 14 of the impeller 102, as best shown in Fig. 3.

In operation, when the lock-up clutch system 1 10 is disengaged, as best shown in Fig. 2, the impeller vanes act on the fluid contained in a torus chamber 1 and, through this action, provide torque to the opposed turbine-piston 106, thereafter the fluid passes though the vanes of stator 104 and begins the cycle again. Fluid also flows from the torus chamber 1 as shown by arrow 7 around and through the lock-up clutch system 1 10 and into a casing chamber 2 behind the turbine-piston 106. The pressure/force of the fluid pushes turbine-piston 106 in the direction of arrows A and B, as best shown in Fig. 2.

When fluid pressure is increased on the rearward side of the turbine piston 106, i.e., from right to left in Figs. 1 -3, to engage the lock-up clutch system 1 10, fluid is now reversed and is directed from casing chamber 2 to the torus chamber 1 . As a result, the secondary piston 122 is urged toward the turbine-piston 106, in the direction of arrow C, and causes the first of two perimeter friction surface portions 1 12 on the turbine-piston 106 to begin to engage with a perimeter friction surface portion 1 13 on the forward side of the secondary piston 122 as best shown in Fig. 3. Inasmuch as the secondary piston 122 rotates at the same speed as the casing 108 and impeller 102, the speed difference between the turbine-piston 106 and impeller 102 begins to equalize, thus reducing the hydrodynamic forces inside the torus. The hydrodynamic forces, in coast mode, tend to push the turbine-piston 106 away from the impeller 102. In addition, as the gap between the friction surface portions 1 12a and 1 13 decreases, fluid flow around the perimeter of the lock-up clutch 1 10 is substantially reduced. Pressure continues to build in the casing chamber 2 and reduce in the torus chamber 1 and the lock-up clutch now engages, in the direction of arrow D in Fig. 3. In the lock-up phase, as best shown in Fig. 4, the impeller friction surface portion 1 14 on the impeller (inside of casing 108), and the second turbine-piston friction surface portion 1 12b on the forward side of the turbine-piston 106 are now forced together. The lock-up configuration is now fully and rapidly engaged. Relative rotational motion between the impeller 102 and turbine-piston 106 ceases.

The phased method of lock-up enabled by the use of a secondary piston 122 allows for a predictable phased engagement of the lock-up feature regardless of the operational demand being placed on the torque converter 100 through the control input. Upshifting and downshifting through the multi-ratio gearbox can be accompanied by a satisfying feel of rapid and certain engagement of the lock-up feature. In addition, owing to the reduction in relative rotational speeds of the impeller 102 and turbine-piston 106 prior to full engagement, one or more of the following advantages can be realized. First, more positive clutch engagement feel; second, less wear and attendant heat build-up on the friction surfaces and in the working fluid; third, lower activation pressures of the lock-up feature and thus less parasitic pumping losses to create such pressures; and/or, fourth, a smoother less jarring lockup torque bump owing to the initial speed equalization between the impeller and turbine-piston.

The various components and features of the above-described exemplary embodiments may be substituted into one another in any combination. It is within the scope of the invention to make the modifications necessary or desirable to incorporate one or more components and features of any one embodiment into any other embodiment. In addition, although the exemplary embodiments discuss steps performed in a particular order for purposes of illustration and discussion, the methods discussed herein are not limited to any particular order or arrangement. One skilled in the art, using the disclosures provided herein, will appreciate that various steps of the methods can be omitted, rearranged, combined, and/or adapted in various ways.

Further, this application is intended to cover such departures from the present disclosure as come within known or customary practice in the art to which this invention pertains. Thus, changes can be made in the above-described invention without departing from the scope of the present invention which is defined by the claims appended thereto.

## Claims

1. A torque converter (100), including a lock-up clutch mechanism (110), adapted to rotate about an axis, comprising:
a torus having an interior torus chamber (1) and comprising an impeller (102) having an impeller perimeter friction surface portion (114), a stator (104), and a turbine comprising a reactive turbine-piston (106) having opposite first and second turbine-piston perimeter friction surface portions (112a,112b), said turbine being drivable in a rotary direction around said axis by hydrokinetic energy supplied from said impeller;
a casing (108) associated with said torus and providing a casing chamber (2) n variable fluid communication with said torus chamber and axially juxtaposed to said torus chamber on an opposite side of said turbine-piston relative to said torus chamber; and
said lock-up clutch mechanism comprising a secondary piston (122) having a secondary-piston perimeter friction surface portion (113), sealed about a perimeter thereof to said casing, fixed in rotation with respect to said casing, located axially adjacent said turbine piston in said casing chamber,
wherein said secondary piston is configured to axially move, in response to an effective fluid pressure increase in said casing chamber relative to said torus chamber, to engage said secondary-piston perimeter friction surface portion with said first turbine-piston perimeter friction surface portion, and further configured to thereafter urge said second turbine-piston perimeter friction surface portion into engagement with said impeller perimeter friction surface portion, thereby eliminating relative rotary motion between said turbine-piston and said impeller.

2. The torque converter as in claim 1, wherein: said secondary piston is fixed in rotation to said casing via splines (120).

3. The torque converter as in claim 1, wherein said secondary piston is fixed in rotation to said casing via tabs (120).

4. The torque converter as in any of claims 1 to 3, wherein said impeller and turbine-piston perimeter friction surface portions extend in a radial direction.

5. The torque converter as in any of claims 1 to 4, wherein said first turbine-piston perimeter friction surface portion faces toward said secondary piston, and said second turbine-piston perimeter friction surface portion faces toward said impeller.

6. The torque converter as in claim 5, wherein said first and second turbine-piston perimeter friction surface portions are clamped between said secondary piston and said impeller perimeter friction surface portion when said lock-up clutch mechanism is engaged.

7. The torque converter as in any of claims 1 to 6, wherein said impeller perimeter friction surface portion, said first and second turbine-piston perimeter friction surface portions, and said secondary-piston perimeter friction surface portion are radially outward of said torus chamber.

8. A method of operating a torque converter (100), said method comprising the steps of:
providing a torus having an interior torus chamber (1) and comprising an impeller (102) having an impeller perimeter friction surface portion (114), a stator (104), and a turbine comprising a reactive turbine-piston (106) having opposite first and second turbine-piston perimeter friction surface portions (112a, 112b), said turbine being drivable in a rotary direction around said axis by hydrokinetic energy supplied from said impeller;
providing a casing (108) associated with said torus and providing a casing chamber (2) in variable fluid communication with said torus chamber and axially juxtaposed to said torus chamber on an opposite side of said turbine-piston relative to said torus chamber;
providing a lock-up clutch mechanism (110) comprising a secondary piston (122) having a secondary-piston perimeter friction surface portion (113), sealed about a perimeter thereof to said casing, fixed in rotation with respect to said casing, and located axially adjacent said turbine-piston in said casing chamber;
increasing fluid pressure in said casing chamber relative to said torus chamber to urge said secondary piston toward said turbine-piston and engage the secondary-piston perimeter friction surface portion with said first turbine-piston perimeter friction surface portion;
equalizing a rotary speed differential between said secondary piston and said turbine-piston;
reducing hydrodynamic pressure within said torus; and
further increasing pressure in said casing chamber relative to said torus chamber so as to urge said second turbine-piston perimeter friction surface portion axially, via movement of said secondary piston, toward and into engagement with said impeller perimeter friction surface portion to eliminate relative rotary motion between said turbine-piston and said impeller.

9. The method as in claim 8, wherein said secondary piston is fixed in rotation to said casing via splines (120).

10. The method as in claim 8, wherein said secondary piston is fixed in rotation to said casing via tabs (120).

11. The method as in any of claims 8 to 10, wherein said impeller and turbine-piston perimeter friction surface portions extend in a radial direction.

12. The method as in any of claims 8 to 11, wherein said first turbine-piston perimeter friction surface portion faces toward said secondary piston, and said second turbine-piston perimeter friction surface portion faces toward said impeller.

13. The method as in claim 12, wherein said first and second turbine-piston perimeter friction surface portions are clamped between said secondary piston and said impeller perimeter friction surface portion when said lock-up clutch mechanism is engaged.

14. The method as in any of claims 8 to 13, wherein said impeller perimeter friction surface portion, said first and second turbine-piston perimeter friction surface portions, and said secondary-piston perimeter friction surface portion are radially outward of said torus chamber.

## Patentansprüche

1. Drehmomentwandler (100), aufweisend einen Überbrückungskupplungsmechanismus (110) aufweist, der dafür ausgelegt ist, sich um eine Achse zu drehen, und umfassend:
einen Torus, der eine innere Toruskammer (1) aufweist und ein Flügelrad (102), das einen Flügelradumfangsreibflächenabschnitt (114) aufweist, einen Stator (104) und eine Turbine umfasst, die einen reaktiven Turbinenkolben (106) umfasst, der einen ersten und einen zweiten sich gegenüberliegenden Turbinenkolbenumfangsreibflächenabschnitt (112a, 112b) aufweist, wobei die Turbine in einer Drehrichtung um die Achse herum durch hydrokinetische Energie angetrieben werden kann, die von dem Flügelrad zugeführt wird;
ein Gehäuse (108), das dem Torus zugeordnet ist und eine Gehäusekammer (2) in variabler Strömungsverbindung mit der Toruskammer bereitstellt und axial neben der Toruskammer auf einer gegenüberliegenden Seite des Turbinenkolbens relativ zu der Toruskammer angeordnet ist; und
wobei der Überbrückungskupplungsmechanismus einen Sekundärkolben (122) umfasst, der einen Sekundärkolbenumfangsreibflächenabschnitt (113) aufweist, der entlang seines Umfangs relativ zu dem Gehäuse abgedichtet ist, bezüglich des Gehäuses drehfest ist und axial neben dem Turbinenkolben in der Gehäusekammer angeordnet ist,
wobei der Sekundärkolben so eingerichtet ist, dass er sich in Reaktion auf einen effektiven Fluiddruckanstieg in der Gehäusekammer relativ zu der Toruskammer axial bewegt, um den Sekundärkolbenumfangsreibflächenabschnitt mit dem ersten Turbinenkolbenumfangsreibflächenabschnitt in Eingriff zu bringen, und des Weiteren so eingerichtet ist, dass er danach den zweiten Turbinenkolbenumfangsreibflächenabschnitt mit dem Flügelradumfangsreibflächenabschnitt in Eingriff drängt, wodurch eine relative Drehbewegung zwischen dem Turbinenkolben und dem Flügelrad eliminiert wird.

2. Drehmomentwandler nach Anspruch 1, wobei der Sekundärkolben über Keilnuten (120) bezüglich des Gehäuses drehfest ist.

3. Drehmomentwandler nach Anspruch 1, wobei der Sekundärkolben über Nasen (120) bezüglich des Gehäuses drehfest ist.

4. Drehmomentwandler nach einen der Ansprüche 1 bis 3, wobei sich der Flügelradumfangsreibflächenabschnitt und der Turbinenkolbenumfangsreibflächenabschnitt in einer radialen Richtung erstrecken.

5. Drehmomentwandler nach einen der Ansprüche 1 bis 4, wobei der erste Turbinenkolbenumfangsreibflächenabschnitt dem Sekundärkolben zugewandt ist und der zweite Turbinenkolbenumfangsreibflächenabschnitt dem Flügelrad zugewandt ist.

6. Drehmomentwandler nach Anspruch 5, wobei der erste und der zweite Turbinenkolbenumfangsreibflächenabschnitt zwischen dem Sekundärkolben und dem Flügelradumfangsreibflächenabschnitt eingeklemmt sind, wenn der Überbrückungskupplungsmechanismus eingekuppelt ist.

7. Drehmomentwandler nach einen der Ansprüche 1 bis 6, wobei der Flügelradumfangsreibflächenabschnitt, der erste und der zweite Turbinenkolbenumfangsreibflächenabschnitt und der Sekundärkolbenumfangsreibflächenabschnitt radial auswärts der Toruskammer liegen.

8. Verfahren zum Betreiben eines Drehmomentwandlers (100), wobei das Verfahren die folgenden Schritte umfasst:
Bereitstellen eines Torus, der eine innere Toruskammer (1) aufweist und ein Flügelrad (102), das einen Flügelradumfangsreibflächenabschnitt (114) aufweist, einen Stator (104) und eine Turbine umfasst, die einen reaktiven Turbinenkolben (106) umfasst, der einen ersten und einen zweiten sich gegenüberliegenden Turbinenkolbenumfangsreibflächenabschnitt (112a, 112b) aufweist, wobei die Turbine in einer Drehrichtung um die Achse herum durch hydrokinetische Energie angetrieben werden kann, die von dem Flügelrad zugeführt wird;
Bereitstellen eines Gehäuses (108), das dem Torus zugeordnet ist und Bereitstellen einer Gehäusekammer (2) in variabler Strömungsverbindung mit der Toruskammer und axial neben der Toruskammer auf einer gegenüberliegenden Seite des Turbinenkolbens relativ zu der Toruskammer; und
Bereitstellen eines Überbrückungskupplungsmechanismus (110), der einen Sekundärkolben (122) umfasst, der einen Sekundärkolbenumfangsreibflächenabschnitt (113) aufweist, der entlang seines Umfangs relativ zu dem Gehäuse abgedichtet ist, bezüglich des Gehäuses drehfest ist und axial neben dem Turbinenkolben in der Gehäusekammer angeordnet ist,
Erhöhen des Fluiddrucks in der Gehäusekammer relativ zur Toruskammer, um den Sekundärkolben in Richtung des Turbinenkolbens zu drängen und den Sekundärkolbenumfangsreibflächenabschnitt mit dem ersten Turbinenkolbenumfangsreibflächenabschnitt in Eingriff zu bringen;
Ausgleichen einer Drehzahldifferenz zwischen dem Sekundärkolben und dem Turbinenkolben;
Reduzieren des hydrodynamischen Drucks innerhalb des Torus; und
weiteres Erhöhen des Drucks in der Gehäusekammer relativ zu der Toruskammer so, das der zweite Turbinenkolbenumfangsreibflächenabschnitt vermittels Bewegung des Sekundärkolbens axial in Richtung zu dem, und in Eingriff mit dem, Flügelradumfangsreibflächenabschnitt gedrängt wird, um eine relative Drehbewegung zwischen dem Turbinenkolben und dem Flügelrad zu eliminieren.

9. Drehmomentwandler nach Anspruch 8, wobei der Sekundärkolben über Keilnuten (120) bezüglich des Gehäuses drehfest ist ist.

10. Drehmomentwandler nach Anspruch 8, wobei der Sekundärkolben über Nasen (120) bezüglich des Gehäuses drehfest ist ist.

11. Drehmomentwandler nach einen der Ansprüche 8 bis 10, wobei sich der Flügelradumfangsreibflächenabschnitt und der Turbinenkolbenumfangsreibflächenabschnitt in einer radialen Richtung erstrecken.

12. Drehmomentwandler nach einen der Ansprüche 8 bis 11, wobei der erste Turbinenkolbenumfangsreibflächenabschnitt dem Sekundärkolben zugewandt ist und der zweite Turbinenkolbenumfangsreibflächenabschnitt dem Flügelrad zugewandt ist.

13. Drehmomentwandler nach Anspruch 12, wobei der erste und der zweite Turbinenkolbenumfangsreibflächenabschnitt zwischen dem Sekundärkolben und dem Flügelradumfangsreibflächenabschnitt eingeklemmt sind, wenn der Überbrückungskupplungsmechanismus eingekuppelt ist.

14. Drehmomentwandler nach einen der Ansprüche 8 bis 13, wobei der Flügelradumfangsreibflächenabschnitt, der erste und der zweite Turbinenkolbenumfangsreibflächenabschnitt und der Sekundärkolbenumfangsreibflächenabschnitt radial auswärts der Toruskammer liegen.

## Revendications

1. Convertisseur de couple (100) comprenant un mécanisme d'embrayage de verrouillage (110), conçu pour tourner autour d'un axe, comprenant :
un tore ayant une chambre de tore intérieure (1) et comprenant une roue (102) ayant une partie de surface de frottement de périmètre de roue (114), un stator (104) et une turbine comprenant un piston de turbine réactif (106) ayant de première et seconde parties de surface de frottement de périmètre de piston de turbine opposées (112a, 112b), ladite turbine pouvant être entraînée dans une direction de rotation autour dudit axe par l'énergie hydrocinétique fournie par ladite roue;
un carter (108) associé audit tore et fournissant une chambre de carter (2) en communication fluidique variable avec ladite chambre de tore et juxtaposée axialement à ladite chambre de tore sur un côté opposé dudit piston de turbine par rapport à ladite chambre de tore; et
ledit mécanisme d'embrayage de verrouillage comprenant un piston secondaire (122) ayant une partie de surface de frottement de périmètre de piston secondaire (113), scellé sur un périmètre de celui-ci audit carter, fixé en rotation par rapport audit carter, situé axialement adjacent audit piston de turbine dans ladite chambre de carter,
dans lequel ledit piston secondaire est configuré pour se déplacer axialement, en réponse à une augmentation effective de la pression de fluide dans ladite chambre de carter par rapport à ladite chambre de tore, pour mettre en prise ladite partie de surface de frottement de périmètre de piston secondaire avec ladite première partie de surface de frottement de périmètre de piston de turbine, et configuré en outre pour pousser ensuite ladite seconde partie de surface de frottement de périmètre de piston de turbine pour venir en prise avec ladite partie de surface de frottement de périmètre de roue, éliminant ainsi le mouvement de rotation relatif entre ledit piston de turbine et ladite roue.

2. Convertisseur de couple selon la revendication 1, dans lequel :
ledit piston secondaire est fixé en rotation audit carter par des cannelures (120).

3. Convertisseur de couple selon la revendication 1, dans lequel ledit piston secondaire est fixé en rotation audit carter via des pattes (120).

4. Convertisseur de couple selon l'une quelconque des revendications 1 à 3, dans lequel ladite roue et lesdites parties de surface de frottement de périmètre de piston de turbine s'étendent dans une direction radiale.

5. Convertisseur de couple selon l'une quelconque des revendications 1 à 4, dans lequel ladite première partie de surface de frottement de périmètre de piston de turbine fait face audit piston secondaire, et ladite seconde partie de surface de frottement de périmètre de piston de turbine fait face à ladite roue.

6. Convertisseur de couple selon la revendication 5, dans lequel lesdites première et seconde parties de surface de frottement de périmètre de piston de turbine sont serrées entre ledit piston secondaire et ladite partie de surface de frottement de périmètre de roue lorsque ledit mécanisme d'embrayage de verrouillage est en prise.

7. Convertisseur de couple selon l'une quelconque des revendications 1 à 6, dans lequel ladite partie de surface de frottement de périmètre de roue, lesdites première et seconde parties de surface de frottement de périmètre de piston de turbine et ladite partie de surface de frottement de périmètre de piston secondaire sont radialement à l'extérieur de ladite chambre de tore.

8. Procédé de fonctionnement d'un convertisseur de couple (100), ledit procédé comprenant les étapes consistant à :
fournir un tore ayant une chambre de tore intérieure (1), et comprenant une roue (102) ayant une partie de surface de frottement de périmètre de roue (114),
un stator (104) et une turbine comprenant un piston de turbine réactif (106) ayant de première et seconde parties de surface de frottement de périmètre de piston de turbine opposées (112a, 112b), ladite turbine pouvant être entraînée dans une direction de rotation autour dudit axe par l'énergie hydrocinétique fournie par ladite roue;
fournir un carter associé audit tore et fournissant une chambre de carter (2) en communication fluidique variable avec ladite chambre de tore et juxtaposée axialement à ladite chambre de tore sur un côté opposé dudit piston de turbine par rapport à ladite chambre de tore;
fournir un mécanisme d'embrayage de verrouillage (110), comprenant un piston secondaire (122) ayant une partie de surface de frottement de périmètre de piston secondaire (113), scellé sur un périmètre de celui-ci audit carter, fixé en rotation par rapport audit carter, et situé axialement adjacent audit piston de turbine dans ladite chambre de carter;
augmenter la pression de fluide dans ladite chambre de carter par rapport à ladite chambre de tore pour pousser ledit piston secondaire vers ledit piston de turbine et mettre en prise la partie de surface de frottement de périmètre de piston secondaire avec ladite première partie de surface de frottement de périmètre de piston de turbine;
égaliser un différentiel de vitesse de rotation entre ledit piston secondaire et ledit piston de turbine;
réduire la pression hydrodynamique à l'intérieur dudit tore; et
augmenter en outre la pression dans ladite chambre de carter par rapport à ladite chambre de tore de manière à pousser axialement ladite seconde partie de surface de frottement de périmètre de piston de turbine, via le mouvement dudit piston secondaire, vers et en prise avec ladite partie de surface de frottement de périmètre de roue pour éliminer le mouvement de rotation relatif entre ledit piston de turbine et ladite roue.

9. Convertisseur de couple selon la revendication 8, dans lequel ledit piston secondaire est fixé en rotation audit carter via des cannelures (120).

10. Convertisseur de couple selon la revendication 8, dans lequel ledit piston secondaire est fixé en rotation audit carter via des pattes (120).

11. Convertisseur de couple selon l'une quelconque des revendications 8 à 10, dans lequel ladite roue et lesdites parties de surface de frottement de périmètre de piston de turbine s'étendent dans une direction radiale.

12. Convertisseur de couple selon l'une quelconque des revendications 8 à 11, dans lequel ladite première partie de surface de frottement de périmètre de piston de turbine fait face audit piston secondaire, et ladite seconde partie de surface de frottement de périmètre de piston de turbine fait face à ladite roue.

13. Convertisseur de couple selon la revendication 12, dans lequel lesdites première et seconde parties de surface de frottement de périmètre de piston de turbine sont serrées entre ledit piston secondaire et ladite partie de surface de frottement de périmètre de roue lorsque ledit mécanisme d'embrayage de verrouillage est mis en prise.

14. Convertisseur de couple selon l'une quelconque des revendications 8 à 13, dans lequel ladite partie de surface de frottement de périmètre de roue, lesdites première et seconde parties de surface de frottement de périmètre de piston de turbine et ladite partie de surface de frottement de périmètre de piston secondaire sont radialement à l'extérieur de ladite chambre de tore.
